# FASCICULE DE BREVET EUROPEEN

(11) **EP 1 439 991 B1**
(45) Date de publication et mention de la délivrance du brevet: **07.03.2007**
(21) Numéro de dépôt: 01983650.1
(22) Date de dépôt: 29.10.2001
(51) Int. Cl.: B60T 13/569

(54) **DISPOSITIF FORMANT CLOISON MOBILE ET ETANCHE, EN PARTICULIER POUR SERVO-FREIN D'UN CIRCUIT DE FREINAGE DE VEHICULE AUTOMOBILE, ET SERVO-FREIN EQUIPE D'UN TEL DISPOSITIF.**
KOLBENEINHEIT MIT DICHTUNG, FÜR FAHRZEUGBREMSKRAFTVERSTÄRKER EINER FAHRZEUGBREMSANLAGE, UND BREMSKRAFTVERSTÄRKER DER EINE SOLCHE KOLBENEINHEIT UMFASST
DEVICE CONSTITUTING A MOBILE AND SEALING PARTITION, IN PARTICULAR FOR A MOTOR VEHICLE BRAKING CIRCUIT BRAKE BOOSTER, AND BRAKE BOOSTER EQUIPPED THEREWITH

(43) Date de publication de la demande: 28.07.2004
(73) Titulaire: HUTCHINSON, 75008 Paris (FR)
(72) Inventeur: GAROIS, Nicolas, F-45200 AMILLY (FR); ALCAIDE, Jean-Philippe, 1005 CACERES (ES); LEONARD, Xavier, F-44370 ROUXIERE (FR); URBAIN, Didier, F-49500 Sainte Gennes D'Andigne (FR)
(74) Mandataire: Bolinches, Michel Jean-Marie
(86) Numéro de dépôt international: PCT/FR2001/003362
(87) Numéro de publication internationale: WO 2003/037693

(56) Documents cités:
- FR-A- 2 762 568
- US-A- 4 881 452
- US-A- 5 076 142
- US-A- 5 207 142
- US-A- 5 233 907
- US-A- 5 233 908

## Description

L'invention concerne un dispositif formant une cloison mobile et étanche, en particulier pour un servo-frein d'un circuit de freinage de véhicule automobile.

D'une manière générale, un servo-frein d'un circuit de freinage pour véhicule automobile est un dispositif amplificateur ou "booster en langue anglaise" qui est interposé entre la pédale de frein et un maître-cylindre qui commande le freinage sous l'actionnement de la pédale de frein. La fonction d'un tel dispositif est d'amplifier la force de commande qui est appliquée par le conducteur sur la pédale de frein au moment du freinage.

Un servo-frein de type à dépression par exemple comprend un boîtier dans lequel une cloison mobile et étanche délimite deux chambres à volumes variables respectivement arrière (côté pédale de frein) et avant (côté maître-cylindre). La chambre arrière est à la pression atmosphérique, alors que la chambre avant est mise sous vide. La cloison doit pouvoir supporter la différence de pression entre les deux chambres d'une part, et assurer l'étanchéité entre les deux chambres d'autre part.

On connaît du document FR-A-2 572 346, un servo-frein du type à dépression dans lequel la cloison est constituée de deux pièces, à savoir une première pièce métallique rigide qui supporte la différence de pression entre les deux chambres, et une seconde pièce souple en élastomère qui est rapportée sur la première pièce pour assurer l'étanchéité.

Une telle cloison présente des inconvénients, notamment son poids et le coût de fabrication de la membrane qui assure l'étanchéité. En effet, une cloison mobile et étanche pour un servo-frein à dépression par exemple se présente généralement sous la forme d'une pièce annulaire qui peut avoir un diamètre intérieur de l'ordre de 60mm et un diamètre extérieur de l'ordre de 270mm.

Le document de brevet FR-A-2 762 568 divulgue un dispositif formant cloison mobile et étanche pour servo-frein d'un circuit de freinage de véhicule automobile, qui est apte à être monté à l'intérieur d'un boîtier pour y délimiter deux chambres à volumes variables, ce dispositif comprenant un premier élément rigide réalisé en une première matière et dont la fonction est de supporter une différence de pression entre les deux chambres, et un second élément souple réalisé en une seconde matière et dont la fonction est d'assurer une étanchéité entre les deux chambres, les deux éléments étant solidaires l'un de l'autre de manière à né former qu'une seule pièce assurant les deux fonctions précitées.

Un but de l'invention est de pallier les inconvénients précités en réduisant le poids et le coût de fabrication de la cloison mobile et étanche d'un servo-frein de circuit de freinage de véhicule automobile par exemple, un servo-frein étant déjà en soi une pièce dont le coût de fabrication est élevé.

A cet effet, l'invention propose un dispositif formant une cloison mobile et étanche, en particulier pour servo-frein d'un circuit de freinage de véhicule automobile, qui est apte à être monté à l'intérieur d'un boîtier pour y délimiter deux chambres à volumes variables, ce dispositif comprenant au moins un premier élément rigide réalisé en une première matière et dont la fonction est de supporter une différence de pression entre les deux chambres, et un second élément souple réalisé en une seconde matière et dont la fonction est d'assurer l'étanchéité entre les deux chambres, les deux éléments étant solidaires l'un de l'autre de manière à ne former qu'une seule pièce assurant les deux fonctions précitées, ce dispositif étant caractérisé en ce que le premier élément rigide de la cloison est formé d'une matière thermoplastique, et en ce que le second élément souple de la cloison est à base d'un élastomère réticulé à transformation thermoplastique comprenant au moins un élastomère à polymérisation par un catalyseur métallocène et une polyoléfine greffée, lesdits premier et second éléments adhérant l'un à l'autre sans adhésif intermédiaire.

De préférence, ledit élastomère à polymérisation par un catalyseur métallocène est choisi dans le groupe constitué par les poly(éthylène/propylène/diène) et les polyoctènes.

Selon l'invention, les deux matières ou compositions de matières formant la cloison sont compatibles pour adhériser directement l'une à l'autre.

D'une manière générale, le premier élément rigide de la cloison est formé d'une matière thermoplastique qui est choisie parmi la famille des polyamides, constituée par des alliages de PA, ou réalisée en PET, PBT ou PP.

Egalement d'une manière générale, le second élément souple est formé :
- soit d'une matière thermoplastique, tel que ledit élastomère réticulé à transformation thermoplastique,
- soit d'une matière élastomère tel que du caoutchouc nitrile, du caoutchouc nitrile hydrogéné, du caoutchouc butyle, du caoutchouc butyle halogéné, un élastomère éthylène-acrylique, un terpolymère éthylène-acrylate-acide acrylique, un copolymère d'épichlorodrine et d'oxyde d'éthylène, un polyéthylène chloré, du polychloroprène ou un polyuréthanne.

Selon un exemple de réalisation, le premier élément de la cloison a la forme d'une plaque non nécessairement plane, et le second élément de la cloison forme un joint d'étanchéité annulaire, dont le bord périphérique interne est solidaire du pourtour de la plaque et dont le bord périphérique externe est destiné à venir se fixer par coincement ou analogue autour d'une pièce qui est associée à la cloison.

Selon un autre exemple de réalisation, notamment applicable à un servo-frein, le premier élément de la cloison a la forme d'une jupe qui présente deux bord périphériques circulaires intérieur et extérieur, et le second élément se scinde en deux parties distinctes qui forment deux joints d'étanchéité annulaires respectivement intérieur et extérieur, ces deux joints étant respectivement rendus en partie solidaires des bords périphériques intérieur et extérieur de la jupe, de manière à déborder plus ou moins pour venir se fixer ensuite par coincement ou analogue au boîtier du servo-frein et à une pièce intermédiaire qui fait saillie à l'intérieur du boîtier.

Une cloison mobile et étanche selon l'invention permet un gain en poids de l'ordre de 40% par rapport à une cloison selon l'art antérieur évoqué en préambule, et de diminuer le coût de fabrication d'une façon substantielle. En effet, la réduction de poids est obtenu par l'utilisation d'une matière thermoplastique rigide qui remplace avantageusement l'aluminium ou l'acier utilisé jusqu'à maintenant, et la réduction de coût résulte notamment de la diminution importante de la surface de la membrane qui entraîne une économie de matière.

L'invention a également pour objet un procédé de fabrication d'une cloison mobile et étanche telle que définie précédemment, la cloison comprenant une partie rigide et une partie souple formant étanchéité, procédé qui est caractérisé en ce qu'il consiste à choisir une matière thermoplastique pour la partie rigide et une matière élastomère ou un élastomère thermoplastique pour la partie souple, et à fabriquer la cloison par une technique de moulage par injection pour faire directement adhérer l'une à l'autre les deux parties de la cloison.

Enfin, l'invention a également pour objet un servo-frein de type à dépression pour circuit de freinage de véhicule automobile, qui est équipé d'une cloison mobile et étanche ayant tout ou partie des caractéristiques précitées, sachant que l'invention ne se limite pas à une telle application, ainsi que l'utilisation de cette cloison à un servo-frein.

D'autres avantages, caractéristiques et détails de l'invention ressortiront du complément de description qui va suivre en référence à des dessins annexés, donnés à titre d'exemple et dans lesquels :
- la figure 1 est une demi-vue en coupe simplifiée d'une cloison mobile et étanche selon l'art antérieur évoqué en préambule ;
- la figure 2 est une demi-vue en coupe simplifiée d'une cloison mobile et étanche selon l'invention ; et
- la figure 3 est une vue en coupe axiale simplifiée et schématique d'un servo-frein à dépression pour circuit de freinage de véhicule automobile, qui est équipé d'une cloison mobile et étanche selon l'invention.

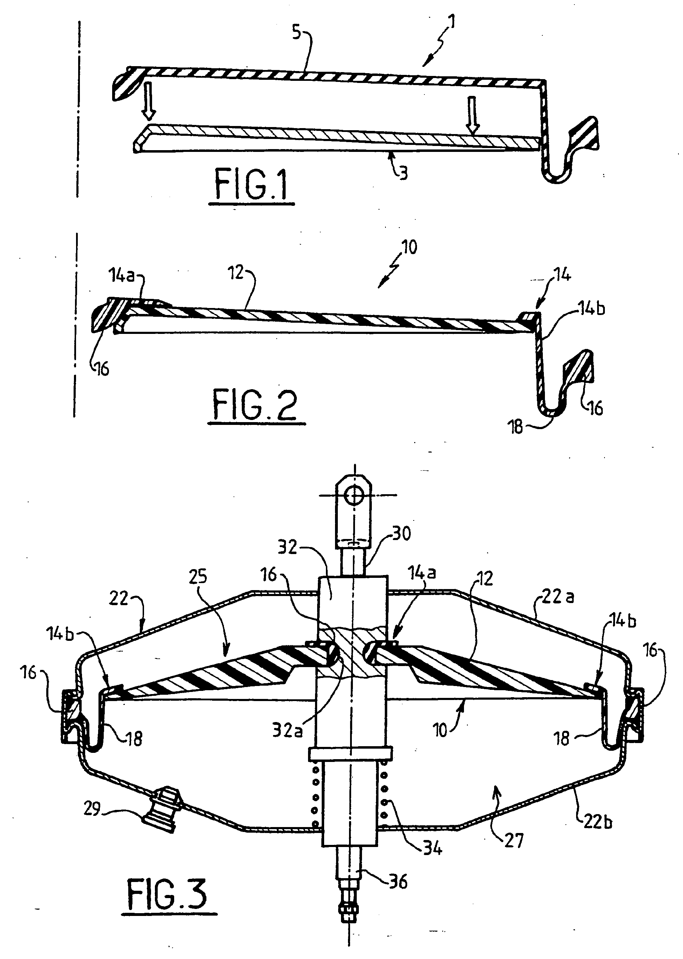

On a illustré schématiquement sur la figure 1, une cloison 1 mobile et étanche qui est destinée à être montée à l'intérieur d'un boîtier de servo-frein à dépression selon l'art antérieur évoqué en préambule. Cette cloison 1 est constituée de deux éléments distincts, à savoir : un élément annulaire métallique rigide 3 et une membrane annulaire souple 5 qui est rapportée sur la pièce 3 et plaquée sur celle-ci par suite de la différence de pression qui existe entre les deux chambres délimitées par la cloison 1 à l'intérieur du boîtier du servo-frein.

Un exemple de réalisation d'une cloison 10 mobile et étanche selon l'invention est schématiquement illustré sur la figure 2. Dans cette cloison 10, le premier élément 12 correspondant au premier élément métallique 3 de la figure 1 est également rigide, mais formé à partir d'une matière thermoplastique.

Cette matière thermoplastique peut être choisie parmi la famille des polyamides, par exemple le PA6 ou le PA66, peut être réalisée à partir d'alliages de polyamides, ou être constituée par du PET, du PBT ou du PP, par exemple. Par ailleurs, la rigidité de la matière thermoplastique peut être éventuellement augmentée en la chargeant avec des fibres de verre ou analogue.

Le second élément ou membrane 14 de la cloison 10 correspondant à la membrane 5 de la figure 1 peut être un élastomère thermoplastique ou un élastomère.

L'élastomère thermoplastique peut être un élastomère réticulé à transformation thermoplastique pouvant comprendre au moins un élastomère à polymérisation par un catalyseur métallocène et une polyoléfine greffée, cet élastomère étant par exemple choisi parmi le groupe comprenant les poly(éthylène/propylène/diène) et les polyoctènes.

La membrane 14 peut être également réalisée en une matière élastomère tel que du caoutchouc nitrile, du caoutchouc nitrile hydrogéné, du caoutchouc butyle, du caoutchouc butyle halogéné, un élastomère éthylène-acrylique, un terpolymère éthylène-acrylate-acide acrylique, un copolymère d'épichlorodrine et d'oxyde d'éthylène, un polyéthylène chloré, du polychloroprène ou un polyuréthanne, par exemple.

Les matériaux pour réaliser les deux éléments 12 et 14 de la cloison 10 sont donc choisis pour être compatibles, de manière à ce qu'ils adhèrent naturellement l'un à l'autre sans la présence d'un adhésif intermédiaire, de manière à ne former qu'une seule pièce qui peut être fabriquée par des techniques classiques de moulage par injection.

Avantageusement, des agents modifiants sont incorporés dans la matière formant le second élément souple de la cloison pour favoriser son adhésion avec le premier élément rigide de la cloison ces agents modifiants pouvant être choisis dans la famille des silanes, dans la famille des méthacrylates de zinc et/ou dans la famille des polyamides modifiés, par exemple.

Dans le mode de réalisation illustré à la figure 2, la membrane qui forme la partie étanchéité de la cloison 10 est en fait scindée en deux parties distinctes qui forment deux joints d'étanchéité annulaires respectivement intérieur 14a et extérieur 14b. Plus précisément, le premier élément de la cloison 10 est une pièce annulaire formant une jupe 13 qui présente deux bords périphériques circulaires intérieur et extérieur. D'une manière générale, les joints d'étanchéité intérieur 14a et extérieur 14b sont respectivement rendus en partie solidaires des bords périphériques intérieur et extérieur de la jupe 13, de manière à déborder plus ou moins pour venir se fixer ensuite par coincement ou analogue sur deux pièces, comme cela sera explicité plus loin en référence à la figure 3.

Dans l'exemple de la figure 2, les parties débordantes des joints d'étanchéité intérieur 14a et extérieur 14b présentent une surépaisseur pour former un bourrelet périphérique 16 pour favoriser leurs fixations et garantir l'étanchéité. Par ailleurs, le joint d'étanchéité extérieur 14b déborde plus largement que le joint 14a pour former un pli 18 qui va favoriser le déplacement de la cloison 10.

Selon une variante de réalisation, on peut envisager de réaliser les deux joints d'étanchéité 14a et 14b avec des matériaux différents, mais toujours compatibles avec celui de la jupe 13.

La figure 3 illustre schématiquement un servo-frein 20 d'un circuit de freinage de véhicule automobile. Le servo-frein 20 comprend notamment un boîtier 22 scindé en deux parties 22a et 22b, et dont le volume intérieur est globalement scindé en deux chambres respectivement arrière 25 et avant 27 au moyen d'au moins une cloison 10 mobile et étanche du type de celle illustrée à la figure 2. La chambre arrière 25 est à la pression atmosphérique, alors que la chambre avant 27 est mise sous vide en étant reliée par un raccord 29 à une pompe à vide (non représentée).

Une tige 30 actionnée à partir de la pédale de frein (non représentée) commande un corps de piston 32 axialement mobile à l'intérieur du boîtier 20 à l'encontre d'un ressort de rappel 34. Du côté opposé de la tige 30, le corps de piston 32 se prolonge axialement par une autre tige de commande 36 ou analogue qui est rendue solidaire de moyens non représentés pour la relier au maître cylindre de commande de freinage.

Le bord périphérique interne du joint intérieur 14a de la cloison 10 est fixé de manière étanche autour du corps de piston 32 par tout moyen approprié. A titre d'exemple, le corps de piston 32 présente une gorge périphérique 32a dans laquelle le bourrelet 16 du joint intérieur 14a est engagé à force. Le bord périphérique externe du joint extérieur 14b de la cloison 10 est fixé de manière étanche par coincement entre les deux parties 22a et 22b du boîtier 22 qui sont assemblées l'une à l'autre par sertissage par exemple.

D'une manière générale, l'élément rigide 12 de la cloison 10 a une épaisseur qui peut varier de 1 mm à 10mm par exemple, et la cloison 10 peut supporter une température de fonctionnement d'au moins 120°C.

Lorsque le conducteur du véhicule actionne la pédale de frein, la tige 30 se déplace de l'arrière vers l'avant en poussant le corps de piston 32, ainsi que la cloison mobile 10 et la tige de commande 36. La force transmise au maître cylindre du circuit de freinage est globalement celle exercée par le pied du conducteur à laquelle s'ajoute celle résultant de l'action de la pression atmosphérique régnant dans la chambre arrière 25 sur la surface de la cloison 10.

Bien entendu, l'invention ne se limite pas aux modes de réalisation qui ont été illustrés aux figures 2 et 3. En particulier, le premier élément rigide 12 de la cloison 10 n'est pas nécessairement une pièce annulaire. Dans le cas d'une pièce en forme de plaque par exemple, un seul joint d'étanchéité est nécessaire à la périphérie de la plaque. Par ailleurs, la cloison mobile et étanche selon l'invention pourrait être utilisée dans d'autres applications que les servo-freins, en particulier dans des dispositifs amplificateurs de puissance qui peuvent être actionnés d'une manière automatique ou semi-automatique.

## Revendications

1. Dispositif formant cloison mobile et étanche, en particulier pour servo-frein d'un circuit de freinage de véhicule automobile, qui est apte à être monté à l'intérieur d'un boîtier (22) pour y délimiter deux chambres à volumes variables (25, 27), ce dispositif comprenant au moins un premier élément rigide (12) réalisé en une première matière et dont la fonction est de supporter une différence de pression entre les deux chambres, et un second élément souple (14) réalisé en une seconde matière et dont la fonction est d'assurer une étanchéité entre les deux chambres, les deux éléments (12, 14) étant solidaires l'un de l'autre de manière à ne former qu'une seule pièce assurant les deux fonctions précitées, **caractérisé en ce que** le premier élément rigide (12) de la cloison (10) est formé d'une matière thermoplastique, et **en ce que** le second élément souple (14) de la cloison (10) est à base d'un élastomère réticulé à transformation thermoplastique comprenant au moins un élastomère à polymérisation par un catalyseur métallocène et une polyoléfine greffée, lesdits premier et second éléments adhérant l'un à l'autre sans adhésif intermédiaire.

2. Dispositif selon la revendication 1, **caractérisé en ce que** ledit élastomère à polymérisation par un catalyseur métallocène est choisi dans le groupe constitué par les poly(éthylène/propylène/diène) et les polyoctènes.

3. Dispositif selon la revendication 1 ou 2, **caractérisé en ce que** le premier élément rigide est formé d'une matière thermoplastique choisie parmi la famille des polyamides, par exemple le PA6 ou le PA66, ou réalisée à partir d'alliages de polyamides.

4. Dispositif selon la revendication 1 ou 2, **caractérisé en ce que** le premier élément rigide (12) de la cloison (10) est réalisé en une matière thermoplastique telle que du PET, du PBT ou du PP.

5. Dispositif selon l'une quelconque des revendications précédentes, **caractérisé en ce que** le premier élément rigide (12) de la cloison a une épaisseur comprise entre 1 mm et 10 mm.

6. Dispositif selon l'une quelconque des revendications précédentes, **caractérisé en ce que** des agents modifiants sont incorporés dans la matière formant le second élément souple (14) de la cloison (10), pour favoriser son adhésion avec le premier élément rigide (12) de la cloison, et **en ce que** ces agents modifiants soient choisis dans la famille des silanes, dans la famille des méthacrylates de zinc et/ou dans la famille des polyamides modifiés.

7. Dispositif selon l'une quelconque des revendications précédentes, **caractérisé en ce que** le premier élément rigide (12) de la cloison (10) a globalement la forme d'une plaque, et **en ce que** le second élément souple (14) de la cloison (10) forme un joint d'étanchéité annulaire qui est au moins en partie solidaire du bord périphérique de la plaque.

8. Dispositif selon l'une quelconque des revendications 1 à 6, **caractérisé en ce que** le premier élément rigide (12) de la cloison (10) est une pièce annulaire qui présente deux bords périphériques circulaires, et **en ce que** le second élément souple (14) de la cloison (10) est scindé en deux joints d'étanchéité annulaires (14a, 14b) qui sont respectivement fixés autour des deux bords périphériques du premier élément rigide (12).

9. Dispositif selon la revendication 8, **caractérisé en ce que** les deux joints d'étanchéité (14a, 14b) sont réalisés en des matières différentes.

10. Procédé de fabrication d'un dispositif formant une cloison mobile et étanche tel que défini par l'une quelconque des revendications précédentes, la cloison (10) comprenant une partie rigide (12) et une partie souple (14) formant étanchéité, **caractérisé en ce qu'**il consiste à choisir, pour la partie rigide (12), une matière thermoplastique et, pour la partie souple (14), une matière à base d'un élastomère réticulé à transformation thermoplastique comprenant au moins un élastomère à polymérisation par un catalyseur métallocène et une polyoléfine greffée, et à fabriquer la cloison (10) par une technique de moulage par injection pour faire directement adhérer l'une à l'autre les deux parties de la cloison.

11. Procédé selon la revendication 10, **caractérisé en ce qu'**il consiste à incorporer dans la matière formant la partie souple (14) de la cloison (10) des agents modifiants pour favoriser son adhésion avec la partie rigide (12) de la cloison.

12. Servo-frein pour circuit de freinage de véhicule automobile, **caractérisé en ce qu'**il comprend au moins un dispositif formant une cloison (10) mobile et étanche telle que définie par l'une quelconque des revendications 1 à 9.

13. Utilisation d'un dispositif tel que défini par l'une quelconque des revendications 1 à 9 pour former une cloison étanche (10) à l'intérieur d'un boîtier (22) de servo-frein d'un circuit de freinage de véhicule automobile.

## Claims

1. Device forming a moving and impervious partition wall, particularly for a servobrake of a motor car brake system, which can be mounted inside a casing (22) to define therein two chambers with variable volumes (25, 27), this device comprising at least one first rigid element (12) made of a first material and of which the function is to withstand a pressure difference between the two chambers, and a second flexible element (14) made of a second material and of which the function is to ensure imperviousness between the two chambers, the two elements (12, 14) being integral with each other so as to form only one single element fulfilling the two aforementioned functions, **characterised in that** the first rigid element (12) of the partition wall (10) is formed from a thermoplastic material and **in that** the second flexible element (14) of the partition wall (10) is based on a cross-linked elastomer with thermoplastic transformation comprising at least one elastomer with polymerisation through a metallocenic catalyst and a grafted polyolefine, said first and second elements adhering to each other without intermediate adhesive.

2. Device according to claim 1, **characterised in that** said elastomer with polymerisation through a metallocenic catalyst is chosen from the group consisting of poly(ethylene/propylene/diene) and polyoctenes.

3. Device according to claim 1 or 2, **characterised in that** the first rigid element is formed from a thermoplastic material chosen from the polyamide family, for example PA6 or PA66 or made from polyamide alloys.

4. Device according to claim 1 or 2, **characterised in that** the first rigid element (12) of the partition wall (10) is made from a thermoplastic material such as PET, PBT or PP.

5. Device according to any one of the preceding claims, **characterised in that** the first rigid element (12) of the partition wall has a thickness between 1 mm and 10 mm.

6. Device according to any one of the preceding claims, **characterised in that** modifying agents are incorporated into the material forming the second flexible element (14) of the partition wall (10) in order to promote its adhesion to the first rigid element (12) of the partition wall, and **in that** these modifying agents are chosen from the family of silanes, the family of methacrylates of zinc and / or the family of modified polyamides.

7. Device according to any one of the preceding claims, **characterised in that** the first rigid element (12) of the partition wall (10) has the overall form of a plate, and **in that** the second flexible element (14) of the partition wall (10) forms an annular seal which is at least partially integral with the peripheral edge of the plate.

8. Device according to any one of the claims 1 to 6, **characterised in that** the first rigid element (12) of the partition wall (10) is an annular element which has two circular peripheral edges, and **in that** the second flexible element (14) of the partition wall (10) is split into two annular seals (14a, 14b) which are respectively fixed around the two peripheral edges of the first rigid element (12).

9. Device according to claim 8, **characterised in that** the two seals (14a, 14b) are made of different materials.

10. Method for producing a device forming a moving and impervious partition wall such as defined by any one of the preceding claims, the partition wall (10) comprising a rigid section (12) and a flexible section (14) ensuring imperviousness, **characterised in that** it consists in choosing, for the rigid section (12), a thermoplastic material and, for the flexible section (14), a material based on a cross-linked elastomer with thermoplastic transformation comprising at least one elastomer with polymerisation through a metallocenic catalyst and a grafted polyolefine, and in producing the partition wall (10) through an injection moulding technique in order to cause the two sections of the partition wall to adhere directly to each other.

11. Method according to claim 10, **characterised in that** it consists in incorporating modifying agents into the material forming the flexible section (14) of the partition wall (10) in order to promote its adhesion to the rigid section (12) of the partition wall.

12. Servobrake for motor car brake system, **characterised in that** it comprises at least one device forming a moving and impervious partition wall (10) such as defined by any one of the claims 1 to 9.

13. Use of a device such as defined by any one of the claims 1 to 9 to form an impervious partition wall (10) inside a servobrake casing (22) of a motor car brake system.

## Patentansprüche

1. Vorrichtung, die eine bewegliche und dichte Zwischenwand bildet, insbesondere für Bremskraftverstärker eines Bremskreises eines Kraftfahrzeugs, die dafür vorgesehen ist, im Innern eines Gehäuses (22) montiert zu werden, um dort zwei Kammern mit variablem Volumen (25, 27) zu begrenzen, wobei diese Vorrichtung zumindest ein steifes Element (12) aufweist, das aus einem ersten Material hergestellt ist und die Funktion hat, einem Druckunterschied zwischen den beiden Kammern auszuhalten, und ein zweites nachgiebig ausgebildetes Element (14), das aus einem zweiten Material hergestellt ist und die Funktion hat, die Abdichtung zwischen den beiden Kammern sicher zu stellen, wobei die beiden Elemente (12, 14) miteinander fest verbunden derart sind, dass sie nur ein einziges Teil bilden, das die vorgenannten Funktionen sicherstellt,
**dadurch gekennzeichnet, dass** das erste steife Element (12) der Zwischenwand (10) aus einem thermoplastischen Material geformt ist und dass das zweite nachgiebig ausgebildete Element (14) der Zwischenwand (10) auf Basis eines durch thermoplastische Umformung vernetzten Elastomers ausgebildet ist, das zumindest ein durch einen metallocenen Katalysator polymerisiertes Elastomer und ein gepfropftes Polyolefin aufweist, wobei das erste und das zweite Element ohne ein dazwischen liegendes Haftmittel aneinander haften.

2. Vorrichtung nach Anspruch 1,
**dadurch gekennzeichnet, dass** das durch einen metallocenen Katalysator polymerisierte Elastomer aus der Gruppe gewählt ist, die von den Poly(ethylenen/-propylenen/-polydienen) und den Polyoctenen gebildet ist.

3. Vorrichtung nach Anspruch 1 oder 2,
**dadurch gekennzeichnet, dass** das erste steife Element aus einem thermoplastischen Material geformt ist, das aus der Familie der Polyamide, beispielsweise PA6 oder PA66, gewählt ist oder aus einer Polyamidlegierung realisiert ist.

4. Vorrichtung nach Anspruch 1 oder 2,
**dadurch gekennzeichnet, dass** das erste steife Element (12) der Zwischenwand (10) aus einem thermoplastischen Material wie beispielsweise PET, PBT oder PP realisiert ist.

5. Vorrichtung nach einem der vorangegangenen Ansprüche,
**dadurch gekennzeichnet, dass** das erste steife Element (12) der Zwischenwand eine Dicke zwischen 1 mm und 10 mm hat.

6. Vorrichtung nach einem der vorangegangenen Ansprüche,
**dadurch gekennzeichnet, dass** dem Material, das das zweite nachgiebig ausgebildete Element (14) der Zwischenwand (10) bildet, Modifiziermittel beigemengt sind, um seine Haftung mit dem ersten steifen Element (12) der Zwischenwand zu begünstigen, und dass diese Modifiziermittel aus der Familie der Siliziumwasserstoffe, der Familie der Zink-Methacrylate und/oder der Familie der modifizierten Polyamide gewählt sind.

7. Vorrichtung nach einem der vorangegangenen Ansprüche,
**dadurch gekennzeichnet, dass** das erste steife Element (12) der Zwischenwand (10) im Wesentlichen die Form einer Platte hat und dass das zweite nachgiebig ausgebildete Element (14) der Zwischenwand (10) ein ringförmiges Dichtungselement bildet, das zumindest teilweise mit dem die Platte umgebenden Rand fest verbunden ist.

8. Vorrichtung entsprechend einem der Ansprüche 1 bis 6,
**dadurch gekennzeichnet, dass** das erste steife Element (12) der Zwischenwand (10) ein ringförmiges Teil ist, das zwei kreisförmige Umfangsränder aufweist, und dass das zweite nachgiebig ausgebildete Element (14) der Zwischenwand (10) aufgespaltet ist in zwei ringförmige Dichtungselemente (14a, 14b), die jeweils um die beiden Umfangsränder des ersten steifen Elements (12) herum befestigt sind.

9. Vorrichtung nach Anspruch 8,
**dadurch gekennzeichnet, dass** die beiden Dichtungselemente (14a, 14b) aus unterschiedlichen Materialien realisiert sind.

10. Verfahren zur Herstellung einer eine bewegliche, dichte Zwischenwand bildenden Vorrichtung, wie in einem der vorangegangenen Ansprüche definiert, wobei die Zwischenwand (10) einen steifen Teil (12) und einen nachgiebig ausgebildeten Teil (14) aufweist, die ein Dichtungselement bilden,
**dadurch gekennzeichnet, dass** es darin besteht, für den steifen Teil (12) ein thermoplastisches Material und für den nachgiebig ausgebildeten Teil (14) ein Material auf Basis eines durch thermoplastische Umformung vernetzten Elastomers zu wählen, das zumindest ein durch einen metallocenen Katalysator polymerisiertes Elastomer und ein gepfropftes Polyolefin aufweist, und darin, über eine Spritzgusstechnik eine Zwischenwand (10) herzustellen, um den einen der beiden Teile der Zwischenwand an dem jeweils anderen haften zu lassen.

11. Verfahren nach Anspruch 10,
**dadurch gekennzeichnet, dass** es darin besteht, dem Material, das den biegsamen Teil (14) der Zwischenwand (10) bildet, Modifiziermittel beizumengen, um seine Haftung mit dem steifen Teil (12) der Zwischenwand zu begünstigen.

12. Bremskraftverstärker für Kraftfahrzeugbremskreis,
**dadurch gekennzeichnet, dass** er zumindest eine Vorrichtung aufweist, die eine bewegliche und dichte Zwischenwand (10) bildet, wie in einem der Ansprüche 1 bis 9 definiert.

13. Verwendung einer Vorrichtung wie in einem der Ansprüche 1 bis 9 definiert, um eine dichte Zwischenwand (10) im Innern eines Gehäuses (22) für Bremskraftverstärker eines Bremskreises eines Kraftfahrzeugs zu bilden.
